# EUROPEAN PATENT APPLICATION

(11) **EP 3 366 653 A1**
(43) Date of publication of application: **29.08.2018**
(21) Application number: 17157605.1
(22) Date of filing: 23.02.2017
(51) Int. Cl.: C02F 1/469, C25B 11/04, C02F 1/461

(54) **SYSTEM FOR WATER DISINFECTION USING ELECTROPORATION**

(71) Applicant: Ibanez Botella, Juan Miguel, 28007 Madrid (ES); Botija Ibanez, Luis Miguel, 28007 Madrid (ES)
(72) Inventor: IBAÑEZ BOTELLA, Juan Miguel, 28007 Madrid (ES); BOTIJA IBAÑEZ, Luis Miguel, 28007 Madrid (ES)
(74) Representative: Lahidalga de Careaga, Jose Luis

(57) **Abstract**

A system for water disinfection by means of electroporation, comprising a reactor (1) composed of a plurality of electrodes that form an electrolytic cell, where they act as a plurality of anodes (2) and cathodes (3); a circuit that allows the water to be confined within the electrolytic cell and to flow through it between the water inlet point into the cell (4) and the water outlet point (5); a pump (6) used to propel the water through the reactor; at least one direct current source (7), which is connected to the reactor (1); and at least one device for process control (PLC) (8). The system produces the irreversible electroporation of bacterial membrane by applying specific electric potentials that alter the transmembrane potential and cause the oxidation of the exposed chemical groups in membrane proteins.

## Description

### FIELD OF THE INVENTION

The present invention relates to a procedure and a system for water disinfection using irreversible electroporation of the cell membrane of microorganisms; the electroporation process consists of the forced pore opening in the bacterial membrane by altering transmembrane potential and anodically oxidising exposed chemical groups in porins.

Both mechanisms are implemented by the application of electric fields and lead to the death of multiple microorganisms from a wide range of species living in water.

### BACKGROUND OF THE INVENTION

Disinfection is the selective destruction of disease-causing microorganisms.

The process does not kill all microorganisms and this represents the main difference between disinfection and sterilisation, by which all microorganisms are destroyed.

As for wastewater, the three types of enteric organisms of human origin with the biggest impact on disease incidence are bacteria, viruses and amoebic cysts.

Pathogens that can be potentially present in water and dangerous to humans encompass well-known groups of bacteria, famous for their association to highly common and extended human diseases, including, but not limited to, coliforms (with the genera Escherichia sp., Enterobacter sp., Klebsiella sp. and Citrobacter sp.), Streptococcus spp. or Legionella spp.; or very common viruses, including, but not limited to, rotavirus and astrovirus groups.

Common bacterial diseases transmitted through water are typhoid fever, cholera, paratyphoid fever and bacillary dysentery, while diseases caused by viruses include poliomyelitis, infectious hepatitis, etc.

Techniques for water disinfection, whether conventional or recently marketed, are often effective, but they have several disadvantages. Thus, new solutions need to be found, and these solutions should be better aligned to biocidal efficiency, environmental sustainability, economic sustainability and ease of operation criteria.

In short, from a general point of view, known methods for disinfection consist of one or more of the following mechanisms, with the limitations or issues also included in this overview:
Disinfection methods through bacterial membrane and/or respiratory enzymes oxidation of bacteria or eukaryotic microorganisms: Broadly speaking, they pose a problem since disinfection requires a particular contact time between the oxidising agent and the microorganism to be verified, with a general order of magnitude of several minutes. Furthermore, this time could vary for the same biocidal agent, as well as depending on the specific microorganism type and certain physical and chemical properties of water.

Through chemical reagent addition: This particular method poses another serious problem, since it produces potentially harmful by-products to the environment and human health. Another disadvantage of this process lies in the fact that many of the microorganisms to be eradicated have resistance strategies or develop defence mechanisms, allowing them to persist in spite of the treatment, depending on the reagent used.

Through oxidiser production in water using the water itself, by applying electrochemical processes: This method adds a double complexity consisting of the control of the oxidiser production and, consequently, dosage of the biocidal agent, since it strongly depends on some physical and chemical characteristics of the water to be treated (pH, temperature, conductivity, turbidity, organic matter content, etc.). Moreover, the production rate of oxidising agent(s) is unpredictable and it is only possible to identify a production range, making the system dimensioning extremely difficult in practice. From the aforementioned pitfalls of this method, the latter turns it into a particularly weak mechanism when it comes to generation of free chlorine from chloride concentration in water.

Through in situ ozone production and ozone mixing with the water to be treated: It is an interesting method, as ozone and its by-products, derived from decomposition when it is in contact with oxidised matter (free radicals OH-), are highly disinfectant. In this regard, it is even more effective than chlorine or chloramines, with the benefit that it is a fast-acting oxidiser that directly alters the plasma membrane structure, reducing therefore the contact time required in a significant manner. However, it also presents drawbacks: it is a very volatile gas (unreliable application), requires a high level of power consumption and, in the presence of aldehydes, bromine, ketones and other compounds, produces undesired by-products (such as DBPs), which are related to human cancer development, among other things.

As for physical methods, filtration: It entails high operating costs due to power consumption and membrane maintenance. Furthermore it can produce microbiological cultures in the membrane itself, which may represent in turn a source of infection.

Another physical method is UV light application: The main issues of this method relate to the fact that it damages the genetic material of bacteria in a potentially reversible manner. Together with the implementation characteristics of industrial models, this contributes to a low degree of reliability when water transmittance is not high (a very frequent situation in water from purification and industrial processes) and/or when ineffective paths are produced during disinfection, caused by varied wear and replacement of lamps.

Low concentrations of chlorine are often applied after the treatment with any of the aforementioned methods.

According to the state of the art, there are several patented methods, such as the one included in the European patent EP1969159, related to "a water disinfection system using membrane electrolytic-reactors with four chambers with adjustable degassing for the production of pH-neutral disinfectant-solution products, by electrochemically activating weak brine for use in the disinfection of drinking water and surfaces, characterised by the fact that it is made up of two halves (5 and 6), which are coupled together to form the bottom cathode side and the top anode side respectively, of an electrolytic reactor, with cathode chambers (7 and 8) being machined into half 5, and anode chambers (9 and 10) being machined into half 6, and with two semi-chambers (11) being interpositioned between these cathode chambers (7 and 8) and anode chambers (9 and 10) on each side of the reactor, which form a degassing chamber (11) when the halves are coupled together; in this condition, each cathode chamber (7 and 8) is separated from the opposite anode chamber (10 and 9) by a selective cationic-exchange membrane (12) placed between the cathode-side electrodes (16) and anode-side electrodes (15), with a pair of vortexer and spacer walls (14) being interpositioned".

The patent application ES2395586 presents "a method for water disinfection by regeneration, based on the use of any type of conducting diamond at extremely low current densities and electric charges, preventing the formation of undesired products (by-products) and providing a simpler and very economical process. Therefore, provided that the system is operated under the conditions included in this invention method, the addition of activating agents is not required and by-product generation is prevented".

This invention relates to a process for water regeneration consisting of water disinfection in at least one electrolytic cell, which is composed of: an anode material coated by doped diamond and supported by an electrical conductor material; an applied current density between 0.1 and 10 A m-2; and an applied electric charge ranging from 0.005 to 0.5 KA h m-3.

Upon examination of the most extended methods for water disinfection, it is determined that nowadays there is not a single method that complies with all the requirements below:
1. A method providing disinfection efficiency, regardless of physicochemical characteristics of water in a wide range of values.
2. A method without potential for negative effects on the environment and human health.
3. A method that does not require temporary storage once the treatment is applied in the water line in order to guarantee disinfection due to the oxidation of any oxidising product in contact with microorganisms.
4. A method with economically feasible energy and operating costs.
5. A method wherein a second method for supplementary treatment is not required.

The present invention meets the five requirements through the development of a system that promotes both oxidation of exposed amino groups in porins and irreversible electroporation of bacterial membrane by applying specific electric potentials and taking advantage of the electrolytic properties of the water where bacteria live. This results in a highly efficient disinfection method without chemical reagents, addition of substances or in situ production of oxidisers in the water.

### DESCRIPTION OF THE INVENTION

Electroporation consists of the application of an electric current that, as it passes through the electrolyte (water to be treated) between a cathode and an anode, induces an electric potential. Therefore, the difference in electric potential between the interior and the exterior of the membrane (membrane potential or transmembrane potential) is significantly modified, disturbing the electro-osmotic equilibrium of the membrane and altering the opening/closure mechanisms of the voltage-gated ion channels. Furthermore, the effect of the generated electric field on the exposed amino groups in porins, ion channels and transport channels results in their denaturation, which multiplies the permanent or irreversible electroporation.

The dysfunction of the cell mechanisms used for keeping or recovering the electrochemical equilibrium of the cell membrane in the presence of a specific gradient, by means of a solute diffusion intended to offset its permeability to water, causes the prevalence of the osmotic gradient and the uncontrolled (unbalanced) entry of water into the cell. By continuously applying the potential for a specific accumulated time, both the intracellular volume and stress supported by the membrane are increased, resulting in the permanent breakdown of membranes and death of microorganisms.

### DESCRIPTION OF THE DRAWINGS

With the aim of complementing the present description and contributing to a better understanding of the invention characteristics, according to a preferable example of the invention embodiment, a set of drawings is attached to this description as an integral part of it, including the following information by way of illustration and not limitation:

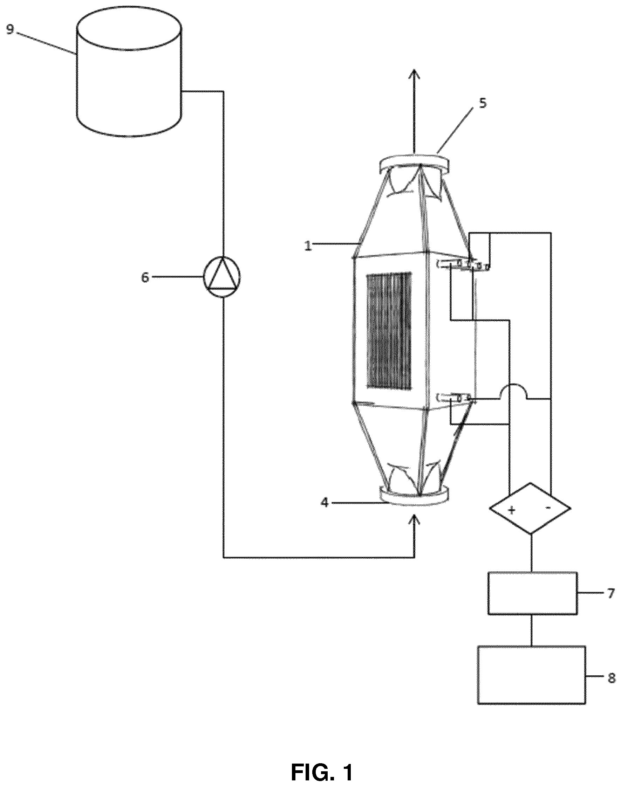

Figure 1 is a schematic drawing of the system comprising the reactor, which is embedded in the water circuit and connected to the electric circuit.

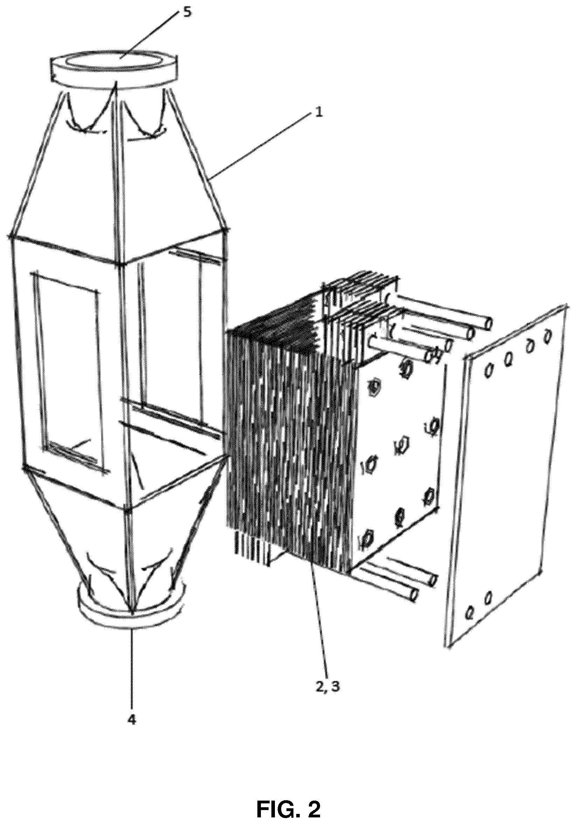

Figure 2 is a schematic view of each part of the reactor, including the water inlet and outlet, and the electrolytic cell with its electrodes.

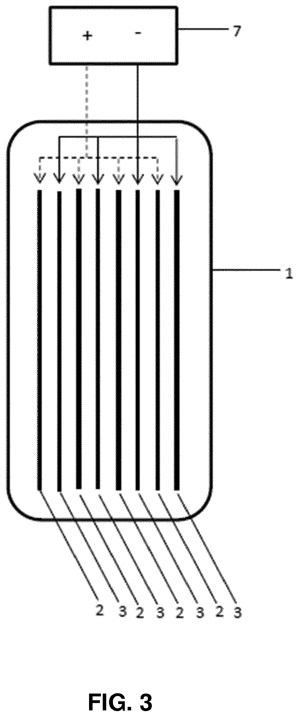

Figure 3 is an internal view of the cell where the electroporation process is accomplished.

### DESCRIPTION OF A PREFERABLE EMBODIMENT OF THE INVENTION

The system of the present embodiment consists of a reactor (1) comprising a plurality of electrodes that form a "filter press" type electrolytic cell, where the desired number of anodes (2) and cathodes (3) are alternated, and the electrodes may be made of any material and produced by any manufacturing process, provided that they allow the required electric potentials to be achieved.

An electrolyte composed of water and the dissolved substances in it.

A circuit for water flow, which allows water to be confined to the electrolytic cell and to move through it, between the inlet point of water into the cell (4) and the outlet point (5), forcing the water to flow between anodes (2) and cathodes (3), and assuring this flow from the moment it enters the cell until it leaves. Thus a known "transit time" of water is assured between both electrodes, being this time equal to or greater than 0.576 s in order to achieve disinfection rate Log3.

A system promoting water flow by means of an impulse pump (6) or the gravity effect.

At least one source of direct current (7) allowing to guarantee the desired current density in the anode(s); this density will depend on the existing anode type, water conductivity and cell geometry, together with the potential of the electrode to be used.

At least one device for process control (PLC) (8), which allows to opportunely apply the required voltage in order to obtain the specified work intensity, considering that water conductivity and, as a result, system conductivity may vary over time and a stable current density must be kept at the anode(s).

Infected water is pumped from a reservoir (9) using a pump (6) and propelled to the inlet (4) of the reactor (1), considering that the reactor (1), as explained above, consists of a plurality of anodes (2) and cathodes (3) forming an electrolytic cell; disinfected water leaves the reactor (1) through an outlet (5). The reactor (1) is connected to a circuit actuated by a direct current source (7) and controlled by a PLC system (8).

The current density applied to the anodes (2) ranges from 100 to 300 A/m².

The induced electric potential must be equal or superior to 0.2 V. The electric field to which bacteria are subjected must have a maximum length of 3 mm. The electric field is applied for at least 0.576 s to achieve disinfection rate Log3.

The use of fields with a lower potential, provided that they are greater than 0.1 V, may bring the same results by means of long duration pulses (100 ms) and long duration intervals (100 ms).

The electrodes used may be composed of any material and derive from any manufacturing procedure, provided that they allow the designated potentials to be applied. Examples of electrode types that may be used include, but are not limited to:
Electrodes made of titanium, ruthenium, iridium or other metals or metal alloys, or electrodes of any of these metals or metal alloys doped with metal oxides or a mixture of metal oxides (for instance, titanium, ruthenium, iridium, boron, caesium or other metals);
Electrodes made of ceramic materials and electrodes made of ceramic materials doped with any of the aforementioned metals;
Electrodes with mixed metal/organic or organic/ceramic composition;
Diamond electrodes and metal-doped diamond electrodes;
Any type of electrode that is capable of conducting electric current with the required densities and generating the desired electrode potentials.

The cell may be constituted by a sequence of alternate anodes (2) and cathodes (3); or only by activatable anodes (2), which act as a cathode (3) when they are inactive or as an anode (2) when they are active, in accordance with connections, wherein the system includes a polarity reversal allowing the alternating anode activation of the electrodes; or by a system composed of bipolar plates comprising a side acting as an anode (2) and another side acting as a cathode (3), both induced by the flow of current through them, whether or not this is combined with any of the aforementioned systems.

The electrolytic cell and its enclosure form a reactor (1) that may be:
A closed reactor when the water is fully confined inside it, with only an inlet point (4) and an outlet point (5) in the reactor, flowing the water through it by means of the pressure provided by a pump (6) or by the water circuit.

An open channel reactor (1) with a water inlet (4) and a water outlet (5) located at different heights, which may be a physically open system, wherein the water flow in the desired direction is achieved by means of the gravity effect on the water mass.

The electric current may be continuously or intermittently applied, using pulsed current, according to current activation/deactivation sequences.

Having sufficiently described the nature of the invention, as well as the form of practical embodiment, it should be placed on record that the previously indicated provisions represented in the attached drawings can have detail modifications as long as they do not alter the fundamental principles, which are included in the paragraphs above and summarised in the following claims.

## Claims

1. A system for water disinfection by means of electroporation, comprising a reactor (1) composed of a plurality of electrodes that form an electrolytic cell, where they act as a plurality of anodes (2) and cathodes (3); a circuit for water flow, which allows water to flow between the inlet point into the cell (4) and the outlet point (5); a pump (6) used to propel the water through the circuit; a direct current source (7), which is connected to the reactor (1); and a device to control the process (8).

2. A system for water disinfection by means of electroporation according to claim 1, wherein the period of time for water flow between the anodes (2) and cathodes (3) inside the reactor (1), from the time the water enters the cell until it leaves, is equal or superior to 0.576 s.

3. A system for water disinfection by means of electroporation according to claim 1, wherein the current density applied to the anodes (2) ranges from 100 to 300 A/m².

4. A system for water disinfection by means of electroporation according to claim 1, wherein the induced electric potential must be equal to or greater than 0.2 V.

5. A system for water disinfection by means of electroporation according to claim 1, wherein the electrodes used on the reactor (1) are made of titanium, ruthenium, iridium or other metals or metal alloys, or are electrodes made of any of these metals or metal alloys doped with metal oxides or a mixture of metal oxides.

6. A system for water disinfection by means of electroporation according to claim 1, wherein the electrodes are composed of ceramic materials and ceramic materials that are doped with metals such as titanium, ruthenium or iridium.

7. A system for water disinfection by means of electroporation according to claim 1, wherein the electrodes present a mixed metal/organic or organic/ceramic composition.

8. A system for water disinfection by means of electroporation in accordance to claim 1, including diamond electrodes and metal-doped diamond electrodes, which are doped with metals such as titanium, ruthenium or iridium.

9. A system for water disinfection by means of electroporation according to claim 1, wherein the cell consists of a sequence of alternate anodes (2) and cathodes (3).

10. A system for water disinfection by means of electroporation according to claim 1, wherein the cell is exclusively composed of activatable anodes (2) that operate as a cathode (3) when they are inactive or as an anode (2) when they are active.

11. A system for water disinfection by means of electroporation in accordance to claim 1, wherein the cell is made up of a system of bipolar plates that comprise a side acting as an anode (2) and another side acting as a cathode (3), both induced by the flow of current through them.

12. A system for water disinfection by means of electroporation according to claim 1, wherein the electric current is continuously or intermittently applied, using pulsed current, in accordance to current activation/deactivation sequences.
